Europäisches Patentamt

European Patent Office

Office européen des brevets

(19)

(11) Numéro de publication : **0 375 583 B1**

(12) ## FASCICULE DE BREVET EUROPEEN

(45) Date de publication du fascicule du brevet :
**03.06.92 Bulletin 92/23**

(51) Int. Cl.⁵ : **B29C 45/72**

(21) Numéro de dépôt : **89470028.5**

(22) Date de dépôt : **07.12.89**

(54) **Procédé et dispositif pour le moulage par injection de matériau thermodurcissable.**

(30) Priorité : **22.12.88 FR 8817204**

(43) Date de publication de la demande :
**27.06.90 Bulletin 90/26**

(45) Mention de la délivrance du brevet :
**03.06.92 Bulletin 92/23**

(84) Etats contractants désignés :
**CH DE FR GB IT LI SE**

(56) Documents cités :
**DE-C- 839 714**
**FR-A- 2 273 646**
**FR-A- 2 591 936**
**US-A- 2 460 831**
**US-A- 3 194 868**

(73) Titulaire : **SEVA, société dite,**
**43, rue du Pont de Fer**
**F-71100 Chalon-sur-Saône (FR)**

(72) Inventeur : **Belot, Pierre**
**5, rue de Touraine**
**F-71880 Chatenoy le Royal (FR)**
Inventeur : **Choux, André**
**11, Rue des Géraniums**
**F-71880 Chatenoy le Royal (FR)**

(74) Mandataire : **Puit, Thierry et al**
**Centre de Recherches de Pont-à-Mousson**
**Service de Propriété Industrielle Boîte Postale 109**
**F-54704 Pont-à-Mousson Cédex (FR)**

## Description

La présente invention est relative à un procédé et à un dispositif pour le moulage par injection de matériau thermodurcissable.

Dans les dispositifs classiques d'injection de matériau thermodurcissable, c'est-à-dire qui polymérise à la chaleur, la filière d'injection, située à l'extrémité du dispositif d'injection, reste en permanence au contact du moule.

Cette surface de contact très réduite permet d'obtenir une pression de contact suffisante entre la buse d'injection et le moule, évitant ainsi les fuites de matière lors de l'injection dans le moule. Malgré la surface de contact réduite entre la filière et le moule, des échanges thérmiques entre le moule chaud (160°C) et la filière d'injection froide (40°C) peuvent entraîner une polymérisation du matériau situé dans la filière.

On connaît, par exemple par le brevet européen EP 149 586, un procédé et un dispositif de moulage par injection de matériau thermodurcissable dans lequel ledit matériau thermodurcissable est injecté dans un moule chaud par l'intermédiaire d'une filière plate froide, de section allongée et de faible hauteur, qui présente donc une grande surface de contact avec le moule et donc une grande surface d'échange thermique.

Ainsi, si on laisse en permanence la filière au contact du moule, le matériau contenu à l'extrémité de la filière au contact avec le moule va polymériser entre deux cycles d'injection et, au cycle suivant, du matériau déjà polymérisé sera injecté dans le moule détériorant ainsi la qualité de la pièce.

Il convient donc de retirer la filière après chaque cycle d'injection, ce qui, malgré toutes les précautions qui peuvent être prises, entraîne un écoulement de matériau à l'extrémité de la filière qui détériore la surface de contact entre la filière et le moule engendrant ainsi une fuite de résine.

La présente invention a donc pour but de résoudre ces problèmes.

La présente invention a plus particulièrement pour objet un procédé, pour le moulage par injection d'un matériau thermodurcissable par un dispositif d'injection à filière dans un moule chaud pour la fabrication de pièces en matériau thermodurcissable, dans lequel la température du dispositif d'injection est régulée afin que le matériau à injecter dans le moule qui reste dans le dispositif d'injection une fois la pièce démoulée soit toujours à une température ne permettant pas la polymérisation dudit matériau, caractérisé en ce que après que le moule a été alimenté en matériau thermodurcissable, ledit matériau restant dans le dispositif d'injection est sectionné à une extrémité dudit dispositif proche dudit moule où ledit matériau n'est pas polymérisé.

Un deuxième objet de la présente invention est de fournir un procédé du type décrit ci-dessus dans lequel le dispositif d'injection reste en contact avec le moule entre deux cycles d'injection.

Un troisième objet de la présente invention est de réaliser un dispositif pour le moulage par injection de matériau thermodurcissable comprenant un dispositif d'injection à filière de ce matériau thermodurcissable à l'intérieur d''un moule chaud dans lequel des moyens de régulations thermiques pour maintenir le matériau thermodurcissable restant dans le dispositif d'injection à une température ne permettant pas la polymérisation dudit matériau, une fois la pièce réalisée, sont prévus.

D'autres caractéristiques et avantages ressortiront à la suite de la description qui va suivre faite en référence aux dessins annexés donnés uniquement à titre d'exemple non limitatif et parmi lesquels :

– la Fig. 1 représente une vue schématique du dispositif d'injection selon l'invention, pendant le moulage de la pièce à fabriquer,

– la Fig. 2 représente une vue de détail du dispositif selon l'invention,

– la Fig. 3 représente une vue schématique du dispositif selon l'invention lors du démoulage de la pièce fabriquée.

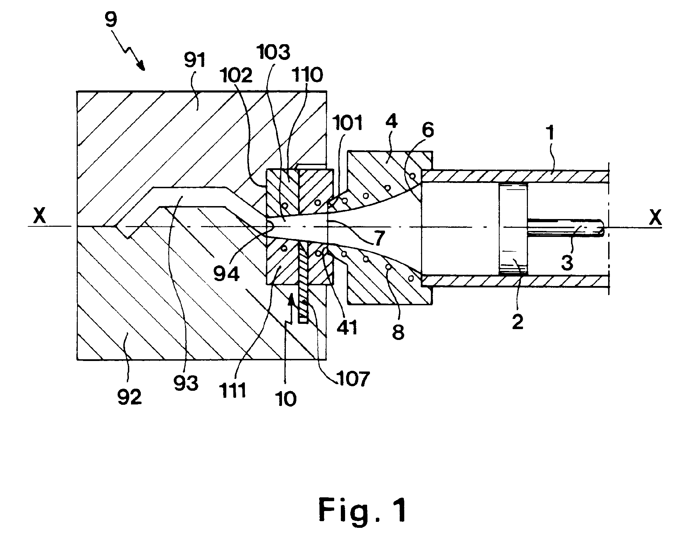

Comme on le voit Fig. 1, le dispositif de moulage par injection selon l'invention est constitué d'un cylindre creux 1 d'injection à l'intérieur duquel se déplace un piston 2 d'injection relié par une tige 3 à un vérin non représenté.

A l'extrémité libre du cylindre creux 1 d'injection, opposée à la tige 3 est fixée une filière 4 d'injection, plate, dont l'orifice d'entrée 6 est circulaire et de même diamètre que celui du cylindre creux 1 tandis que son orifice de sortie 7 a la forme d'une fente de faible hauteur et de grande largeur.

Cette filière 4 est régulée en température par l'intermédiaire d'un circuit de régulation 8 par exemple constitué d'un circuit de circulation de fluide. Plus particulièrement, la température de la filière 4 est régulée par le circuit de régulation 8 pour que la résine thermodurcissable qu'elle contient soit toujours à une température inférieure à sa température de polymérisation.

L'ensemble constitué par le cylindre creux 1 et la filière 4 est monté mobile en translation selon l'axe X-X du cylindre creux 1.

Il est destiné à venir alimenter en résine thermodurcissable un moule 9 constitué d'un demi-moule supérieur 91 monté mobile selon un axe vertical grâce à un dispositif non représenté, et d'un demi-moule inférieur 92 monté fixe, ces deux demi-moules 91, 92 délimitant une cavité de moulage 93.

L'orifice d'entrée de la cavité de moulage 93 est constitué d'une fente 94 de faible hauteur et de grande largeur dont la section est plus petite que celle de l'orifice d'entrée 6 de la filière 4.

Un seuil de liaison 10 entre la filière 4 et le moule 9 est interposé.

Comme on le voit Fig. 1, la filière 4 d'injection et le seuil de liaison 10 sont placés dans le plan de joint des deux demi-moules 91 et 92 du moule 9.

Ainsi, la fente 94 constituant l'orifice d'entrée de la cavité de moulage 93 est délimitée par une ouverture ménagée dans le plan de joint des deux demi-moules 91, 92.

Mais, selon un autre mode de réalisation, la filière 4 d'injection et le seuil de liaison 10 pourraient être placés sur un des demi-moules, la filière d'injection alimentant alors le moule 9 selon un plan perpendiculaire au plan de joint des deux demi-moules 91, 92.

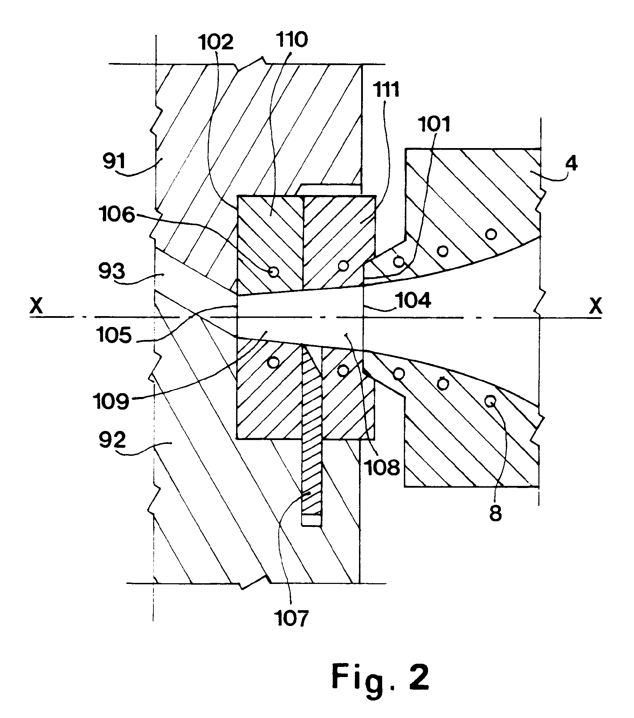

Comme on le voit aux Fig. 1 et 2, le seuil de liaison 10 présente une face 101 de contact contre laquelle vient se placer, et éventuellement se fixer, une face correspondante 41 de la filière 4 délimitant l'orifice de sortie 7 de cette filière 4.

Le seuil de liaison 10 présente, à son extrémité opposée à sa face 101, une face 102 de contact avec le moule 9.

Le seuil de liaison 10 est percé d'une cavité 103, d'axe X-X, dont l'orifice d'entrée 104, situé à la face de contact 101, est de même forme que l'orifice de sortie 7 de la filière 4 et placée dans le prolongement de ce dernier.

La cavité 103 présente en outre un orifice de sortie 105, situé à la face de contact 102, de section allongée et de faible hauteur destiné à venir se plaquer contre la fente 94 du moule 9 de même forme que l'ouverture de sortie 105 de la cavité 103 du seuil de liaison 10.

Le seuil de liaison 10 présente un circuit 106 de régulation de la température de la cavité 103 constitué par exemple d'un circuit de circulation de fluide.

Un dispositif de séparation et d'obturation, constitué par un couteau mobile 107, placé dans un plan oblique par rapport à l'axe X-X, est destiné à séparer la cavité 103 du seuil de liaison 10 en une partie amont 108, située du côté de la filière 4, et une partie aval 109, située du côté du moule 9.

Selon le mode de réalisation représenté Fig. 1, le couteau mobile 107 est dans un plan perpendiculaire à l'axe X-X de la cavité 103 du seuil de liaison 10.

La partie amont 108 présente toujours une température inférieure à la température de polymérisation de la résine, la partie aval 109 présentant, à sa zone de contact avec le moule 9, une température supérieure à la température de polymérisation, et, à sa zone de contact avec le couteau 107, une température inférieure à la température de polymérisation.

Selon le mode de réalisation représenté Fig. 1, le seuil de liaison 10 est constitué d'une partie 110 solidaire du demi-moule 91 et d'une partie 111 solidaire du demi-moule 92 et donc séparable de la partie 110.

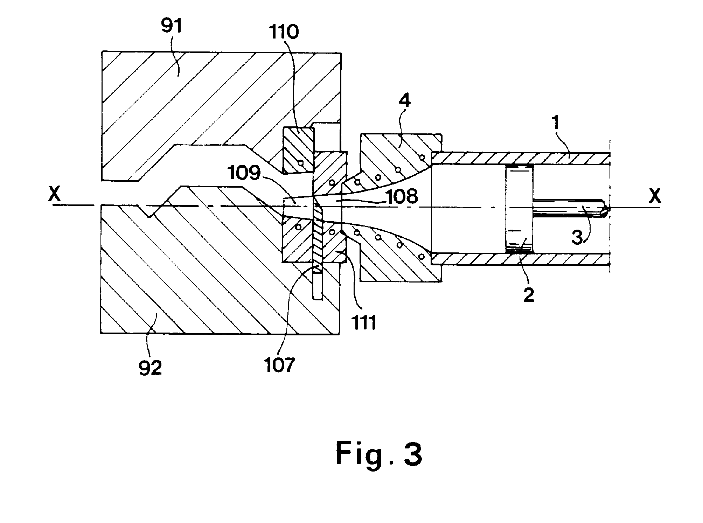

Comme on le voit aux Fig. 2 et 3, la partie amont 108 de la cavité 103 est entièrement délimitée par la partie 111 du seuil de liaison 10 solidaire du demi-moule 92 et par le couteau mobile 107.

La partie aval 109 de la cavité 103 constitue une cavité démoulable par la séparation des parties 110 et 111 du seuil de liaison 10.

Comme on le voit aux Fig. 1 et 2, le circuit de régulation thermique 106 du seuil de liaison 10 régule la température dans les deux parties 110 et 111 du seuil de liaison 10.

Le fonctionnement du dispositif ci-dessus est le suivant.

La filière 4 étant plaquée, par sa surface 41, contre la surface correspondante 101 du seuil de liaison 10, le couteau mobile 107 laissant communiquer les parties amont 108 et aval 109 de la cavité 103 du seuil de liaison 10, le piston 2 avance dans le cylindre creux 1 injectant le matériau thermodurcissable dans le moule 9 chaud où ledit matériau polymérise.

La filière 4, par le circuit de régulation thermique 8, et le seuil de liaison 10, par le circuit de régulation 106, sont refroidis, toute la filière 4 demeurant à une température ne permettant pas la polymérisation du matériau à injecter.

La partie amont 108 de la cavité 103 du seuil de liaison présente une température régulée par le circuit de régulation thermique 106 telle que le matériau thermodurcissable ne polymérise pas dans cette partie amont 108.

La partie aval 109 peut, dans sa zone à proximité immédiate de son ouverture de sortie 105, présenter une température telle que le matériau thermodurcissable y polymérise. Mais, la régulation opérée par le circuit de régulation thermique 106 est telle que, dans la zone de la partie aval 109 à proximité du couteau mobile 107, le matériau thermodurcissable ne polymérise jamais.

Ainsi, une fois le moule 9 alimenté en matériau thermodurcissable, le couteau mobile 107 coupe , dans la cavité 103 du seuil de liaison 10, le matériau à injecter dans une zone où il n'est pas polymérisé.

A la suite de cela, l'ouverture du moule 9 est réalisée, la pièce fabriquée à laquelle est fixée le matériau thermodurcissable qui à été sectionné en aval du couteau mobile 107 étant démoulée.

Le couteau mobile 107 jouant par ailleurs le rôle d'obturateur du dispositif d'injection, constitué par la filière 4 et la partie amont 108 du seuil de liaison 10, le matériau à injecter contenu dans ledit dispositif d'injection ne peut pas s'écouler et ne vient donc pas perturber la qualité de la jonction entre les parties 110 et 111 du seuil 10.

Un nouveau cycle d'injection peut alors commencer qui ne nécessite pas de séparer le dispositif d'injection par rapport au moule sans pour autant entraîner l'injection, lors du cycle suivant, de matériau déjà polymérisé.

## Revendications

1. Procédé pour le moulage par injection d'un matériau thermodurcissable par un dispositif d'injection à filière (1-4-10) dans un moule (9) chaud pour la fabrication de pièces en matériau thermodurcissable, dans lequel la température du dispositif d'injection (1-4-10) est régulée afin que le matériau à injecter dans le moule (9) qui reste dans le dispositif d'injection (1-4-10) une fois la pièce démoulée soit toujours à une température ne permettant pas la polymérisation dudit matériau, caractérisé en ce que , après que le moule (9) a été alimenté en matériau thermodurcissable, ledit matériau restant dans le dispositif d'injection (1-4-10) est sectionné à une extrémité dudit dispositif (1-4-10) proche dudit moule (9) où ledit matériau n'est pas polymérisé.

2. Procédé selon la revendication précédente caractérisé en ce que le dispositif d'injection (1-4-10) reste en contact avec le moule (9) entre deux cycles d'injection.

3. Dispositif pour le moulage par injection de matériau thermodurcissable comprenant un dispositif d'injection (1-4-10) à filière (4) de ce matériau thermodurcissable à l'intérieur d'un moule (9) chaud, et dans lequel un seuil de liaison (10), refroidi par un circuit de régulation thermique (106), et présentant une cavité (103) faisant communiquer un orifice de sortie (7) de la filière (4) avec un orifice d'entrée (94) d'une cavité de moulage (93) du moule (9), est interposé entre le moule (9) et la filière (4), pour la mise en oeuvre du procédé selon l'une des revendications précédentes, caractérisé en ce que le seuil de liaison (10) présente des moyens (107) pour couper, dans la cavité (103) du seuil de liaison (10), le matériau à injecter dans une zone où il n'est pas polymérisé.

4. Dispositif selon la revendication 3, caractérisé en ce que la filière (4) est refroidie par un circuit de régulation thermique (8).

5. Dispositif selon la revendication 3 caractérisé en ce que le seuil de liaison (10) est constitué d'une partie (110), solidaire d'un demi-moule mobile (91) du moule (9), et d'une partie (111) solidaire d'un demi-moule (92) du moule (9).

6. Dispositif selon la revendication 5 caractérisé en ce que, les moyens (107) pour couper le matériau à injecter dans la cavité (103) délimitant une partie amont (108) de la cavité (103) et une partie aval (109) de cette cavité (103), la partie aval (109) constitue une cavité démoulable par la séparation des deux partie (110) et (111) du seuil de liaison (10).

## Patentansprüche

1. Verfahren zum Spritzgießen eines warmhärtbaren Materials mittels einer Düsen-Spritzgießvorrichtung (1-4-10) in eine erwärmte Gießform (9) zur Herstellung von Werkstücken aus warmhärtbarem Material, wobei die Temperatur der Einspritzvorrichtung (1-4-10) geregelt wird, damit das in die Gießform (9) einzuspritzende Material, das in der Einspritzvorrichtung verbleibt, wenn das Werkstück ausgeformt ist, immer auf einer Temperatur gehalten wird, die keine Polymerisation des Materials zuläßt, **dadurch gekennzeichnet, daß,** nachdem die Gießform (9) mit warmhärtbarem Material gefüllt wurde, das in der Einspritzvorrichtung (1-4-10) verbleibende Material an einem Endbereich der Vorrichtung (1-4-10) nahe der Gießform (9), wo das Material nicht polymerisiert, abgeteilt wird.

2. Verfahren nach dem vorhergehenden Anspruch, **dadurch gekennzeichnet, daß** die Einspritzvorrichtung (1-4-10) zwischen zwei Einspritzzyklen mit der Gießform (9) in Berührung bleibt.

3. Vorrichtung zum Spritzgießen von warmhärtbarem Material, die eine Vorrichtung (1-4-10) mit Düsen (4) zum Einspritzen des warmhärtbaren Materials ins Innere einer erwärmten Gießform (9) aufweist, und bei der ein Anschlußteil (10), welches durch einen Thermo-Regelkreis (106) gekühlt wird und mit einem Hohlraum (103) ausgebildet ist, der eine Ausgangsöffnung (7) der Düse (4) mit einer Einlaßöffnung (94) eines Formhohlraums (93) der Gießform (9) verbindet, zwischen der Gießform (9) und der Düse (4) zwischengeschaltet ist, zur Durchführung des Verfahrens nach einem der vorhergehenden Ansprüche, **dadurch gekennzeichnet, daß** das Anschlußteil (10) im Hohlraum (103) des Anschlußteils (10) eine Einrichtung (107) zum Abschneiden des spritzzugießenden Materials in einer Zone aufweist, wo es nicht polymerisieren kann.

4. Vorrichtung nach Anspruch 3, **dadurch gekennzeichnet, daß** die Düse (4) durch einen Thermo-Regelkreis (8) gekühlt wird.

5. Vorrichtung nach Anspruch 3, **dadurch gekennzeichnet, daß** das Anschlußteil (10) aus einem mit einer beweglichen Formhälfte (91) der Gießform (9) fest verbundenen Teil (110) und einem mit einer Formhälfte (92) der Gießform (9) fest verbundenen Teil (111) gebildet ist.

6. Vorrichtung nach Anspruch 5, **dadurch gekennzeichnet, daß,** wenn die Einrichtung (107) zum Abschneiden des Spritzgußmaterials in dem Hohlraum (103) einen Teil (108) stromaufwärts von dem Hohlraum (103) und einen Teil (109) stromabwärts von diesem Hohlraum (103) abteilt, der stromabwärtige Teil (109) einen Hohlraum bildet, der durch die Trennung der beiden Teile (110) und (111) des Anschlußteils (10) entformbar ist.

## Claims

1. Method for injection moulding a thermosettable material, by means of a die injection device (1, 4, 10), into a hot mould (9) for the production of articles of thermosettable material, in which the temperature of the injection device (1, 4, 10) is regulated so that the material to be injected into the mould (9), which remains in the injection device (1, 4, 10) once the article has been removed from the mould, is always at a temperature not allowing polymerization of the said material, characterized in that, after the mould (9) has been filled with thermosettable material, the said material remaining in the injection device (1, 4, 10) is severed at one end of the said device (1, 4, 10) in the vicinity of the said mould (9) where the said material is not polymerized.

2. Method according to the preceding claim, characterized in that the injection device (1, 4, 10) remains in contact with the mould (9) between two injection cycles.

3. Device for injection moulding thermosettable material, comprising a device (1, 4, 10) for injecting, by way of a die (4), this thermosettable material inside a hot mould (9), and in which a connection threshold (10), which is cooled by a heat regulation circuit (106) and has a cavity (103) connecting an outlet orifice (7) of the die (4) to an inlet orifice (94) of a mould cavity (93) of the mould (9), is disposed between the mould (9) and the die (4), for carrying out the method according to one of the preceding claims, characterized in that the connection threshold (10) has means (107), in the cavity (103) of the connection threshold (10), for cutting off the material to be injected in a zone where it is not polymerized.

4. Device according to Claim 3, characterized in that the die (4) is cooled by a heat regulation circuit (8).

5. Device according to Claim 3, characterized in that the connection threshold (10) is formed from a portion (110) which is integral with a movable half-mould (91) of the mould (9) and from a portion (111) which is integral with a half-mould (92) of the mould (9).

6. Device according to Claim 5, characterized in that the means (107) for cutting off the material to be injected into the cavity (103) delimit an upstream portion (108) of the cavity (103) and a downstream portion (109) of this cavity (103), and the downstream portion (109) forms a cavity which may be removed from the mould by separating the two portions (110) and (111) of the connection threshold (10).

Fig. 1

Fig. 2

**Fig. 3**